# EUROPÄISCHE PATENTANMELDUNG

(11) **EP 2 893 837 A1**
(43) Veröffentlichungstag der Anmeldung: **15.07.2015**
(21) Anmeldenummer: 14166965.5
(22) Anmeldetag: 05.05.2014
(51) Int. Cl.: A47B 21/06, A47B 97/00

(54) **Haltevorrichtung zum Halten eines kabelförmigen Gegenstandes sowie Verwendung**

(30) Priorität: 09.01.2014 DE 102014200192
(71) Anmelder: Thonet GmbH, 35066 Frankenberg (DE)
(72) Erfinder: Schott, Randolf, 35066 Frankenberg/Eder (DE)
(74) Vertreter: Hoffmann Eitle

(57) **Zusammenfassung**

Die vorliegende Erfindung betrifft eine Haltevorrichtung zum Halten eines kabelförmigen Gegenstandes, insbesondere eines Elektrokabels, an einem Gegenstand wie einem Möbelstück, bevorzugt einem Tischbein. Der Haltekörper umfasst einen Haltekörper aus einem Kunststoffmaterial mit einem zur Aufnahme eines kabelartigen Gegenstandes zumindest abschnittsweise geöffneten Aufnahmekanal sowie mit einer Anlagefläche. Im Bereich der Anlagefläche ist ein Magneten im Haltekörper aufgenommen.

## Beschreibung

### Technisches Gebiet

Die vorliegende Erfindung betrifft eine Haltevorrichtung zum Halten eines kabelförmigen Gegenstandes, insbesondere eines Elektrokabels, an einem Gegenstand wie einem Möbelstück, bevorzugt einem Tischbein.

### Stand der Technik

Es ist das Dokument DE 20 2008 013 731 U1 bekannt, das einen Magnet-Kabelhalter betrifft. Ein solcher Kabelhalter wird beispielsweise im Motorraumbereich verwendet, um Kabel zu Verlegen. Der Kabelhalter umfasst einen Halteabschnitt zur Aufnahme eines Kabels und als Befestigungsmittel zur Befestigung des Kabelhalters an einer Wand einen Haftmagneten. Der Halteabschnitt wird an einem Blechstreifen gebildet, der an seinem einen Ende mit der Fassung der Haftmagneten durch eine Schweißverbindung verbunden ist und sich parallel zur Haftebene des Haftmagneten erstreckt, und der an seinem anderen Ende abgewinkelt ist, um die Haftebene kugelförmig zu übergreifen und so eine zur Haftebene offene Halteaufnahme für das Kabel auszubilden.

Ferner ist ein Halter gemäß WO 2007/042291 A1 bekannt, der einen Halteabschnitt zum Halten eines Gegenstandes, insbesondere eines elektrischen Kabels, und einen Lagerabschnitt zum Lagern an einem Möbel aufweist. In einer Ausführungsform ist der Halter als ein Gussteil aus einem Kunststoff, Metall oder einem Verbundmaterial ausgeführt, wobei der Halter ein solches Gewicht aufweist, dass er mit seiner Gewichtskraft sicher auf dem Möbelbauteil abgestellt werden kann. Als weitere Maßnahme, den Halter sicher an dem Möbel anzuordnen, kann optional ein Magnet vorgesehen sein, der beispielsweise an eine metallische Fläche wie einem Metallkörper oder einer Metallbeschichtung des Möbels anhaftet.

In der DE 44 37 232 C1 wird ein Kabelhalter für Büromöbel gezeigt, wobei der Kabelhalter an einem Rahmenteil oder Fuß des Möbels anbringbar ist und der C-förmig und aus einem federelastischen Material ausgebildet ist, so dass er auf den Rahmenteil oder Fuß aufklipsbar ist und diesen im angebrachten Zustand zumindest teilweise umgreift.

Die DE 197 02 956 A1 zeigt eine Kabelschelle für die Montage auf Metallflächen. Es wird sowohl auf die Bohrung für Nägel oder Dübelschrauben als auch auf eine Klebstoffbeschichtung des Fußes des Schellenkörpers verzichtet und stattdessen eine Magnethalterung vorgesehen.

### Gegenstand der Erfindung

Aufgabe der vorliegenden Erfindung ist es, eine Haltevorrichtung für einen kabelförmigen Gegenstand bereitzustellen, die für eine schnelle und flexibel einsetzbare Befestigung eingerichtet ist, ein sicheres Halten des kabelförmigen Gegenstandes ermöglicht und leicht montiert werden kann.

Der Gegenstand des Anspruchs 1 stellt hierfür eine Haltevorrichtung zum Halten eines kabelförmigen Gegenstandes bereit. Weitere bevorzugte Ausführungsformen sind in den abhängigen Ansprüchen aufgeführt. Ferner betrifft die vorliegende Erfindung die Verwendung einer Haltevorrichtung zum Halten eines kabelförmigen Gegenstandes.

Die Haltevorrichtung gemäß der vorliegenden Erfindung ist durch Verwendung eines Kunststoffmaterials für den Haltekörper relativ leicht ausgeführt, und somit einfach in der Handhabung. Der Magnet ermöglicht es, die Haltevorrichtung unabhängig von Bohrungen an einem Gegenstand anzubringen, wobei ein zu haltender, kabelförmiger Gegenstand im Aufnahmekanal sicher aufgenommen wird. Da die Anlagefläche des Haltekörpers konkav gewölbt ist, kann sie sich gut an einen zylindrischen Körper, wie ein Tischbein, anlegen.

In der bevorzugten Ausführungsform ist der Magnet derart im Haltekörper aufgenommen, dass eine Seite des Magneten im Bereich der Anlagefläche freigelegt ist. Es ist möglich, dass die freigelegte Fläche des Magneten gegenüber der Anlagefläche leicht zurückgesetzt ist. In einer Modifikation ist die zur Anlagefläche weisende Fläche des Magneten vom Haltekörper umschlossen, oder durch eine Beschichtung überzogen.

Es ist möglich, den Magneten nach Ausbilden des Haltekörpers in eine Öffnung des Haltekörpers einzulegen bzw. einzudrücken, oder alternativ den Magneten bereits beim Ausbilden des Haltekörpers zu Umformen.

In einer Ausführungsform ist der Haltekörper mit einem geneigten Vorsprung versehen ist, der im Bereich der Öffnung des Aufnahmekanals angeordnet ist. Dieser kann als Einführhilfe für den kabelförmigen Gegenstand hilfreich sein. Bevorzugt weist der Haltekörper zwei Vorsprünge auf.

Ferner kann sich der Aufnahmekanal von einer Endfläche des Haltekörpers zu einer anderen Endfläche des Haltekörpers erstrecken. Es wird demnach die gesamte Länge des Haltekörpers zur Aufnahme eines kabelförmigen Gegenstandes ausgenutzt.

Bevorzugt handelt es sich beim Magnet der Haltevorrichtung um einen Neodymmagnet. Dieser ermöglicht vergleichsweise hohe Haltekräfte.

In einer Ausführungsform ist der Haltekörper aus ABS-Kunststoff ausgebildet. Der ABS-Kunststoff lässt sich beispielsweise mit einem 3D-Drucker oder auch in einem Spritzgussverfahren verarbeiten.

Bevorzugt weist der Haltekörper eine Länge von etwa 30 mm, eine Breite von etwa 18 mm, und eine Höhe von etwa 15 mm auf, und ist somit kompakt ausgebildet.

In einer weiteren Ausführungsform ist die Anlagefläche an einer zur Öffnung des Aufnahmekanals gegenüberliegenden Seite des Haltekörpers vorgesehen ist.

Ferner kann der Aufnahmekanal einen Innenradius R4, und bevorzugt abschnittsweise einen Außenradius R5 aufweisen. Auf diese Weise wird ein im Querschnitt zur Längsrichtung der Haltevorrichtung ein abschnittsweise rohrförmiger Haltekörperabschnitt ausgebildet. Der vergleichsweise dünnwandige Bereich kann beim Eindrücken eines Kabels in die Haltevorrichtung elastisch zurückweichen.

### Kurze Beschreibung der Zeichnungen

- Fig. 1: zeigt eine perspektivische Ansicht einer Ausführungsform der erfindungsgemäßen Haltevorrichtung.
- Fig. 2: zeigt eine Draufsicht auf eine Endfläche der in Fig. 1 dargestellten Haltevorrichtung.
- Fig. 3: ist eine Seitenansicht der in Fig. 1 dargestellten Haltevorrichtung.

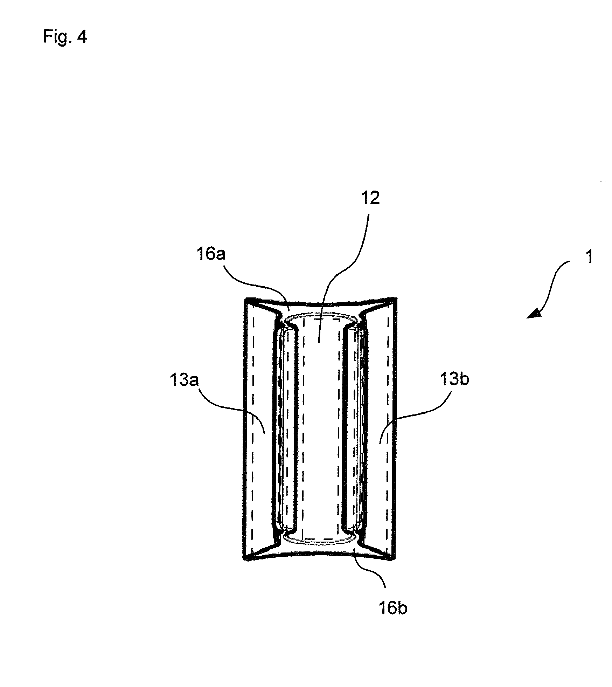

- Fig. 4: ist eine Draufsicht auf die Öffnung des Aufnahmekanals der in Fig. 1 dargestellten Haltevorrichtung.
- Fig. 5: zeigt den Einsatz der erfindungsgemäßen Haltevorrichtung beim Halten eines Kabels an einem rohrförmigen Gegenstand.

### Beschreibung der bevorzugten Ausführungsformen

Nachfolgend wird eine bevorzugte Ausführungsform der vorliegenden Erfindung unter Bezugnahme auf die Zeichnungen im Detail beschrieben. Weitere in diesem Zusammenhang genannte Modifikationen einzelner Merkmale der gezeigten Ausführungsform können jeweils miteinander kombiniert werden, um neue Ausführungsformen auszubilden.

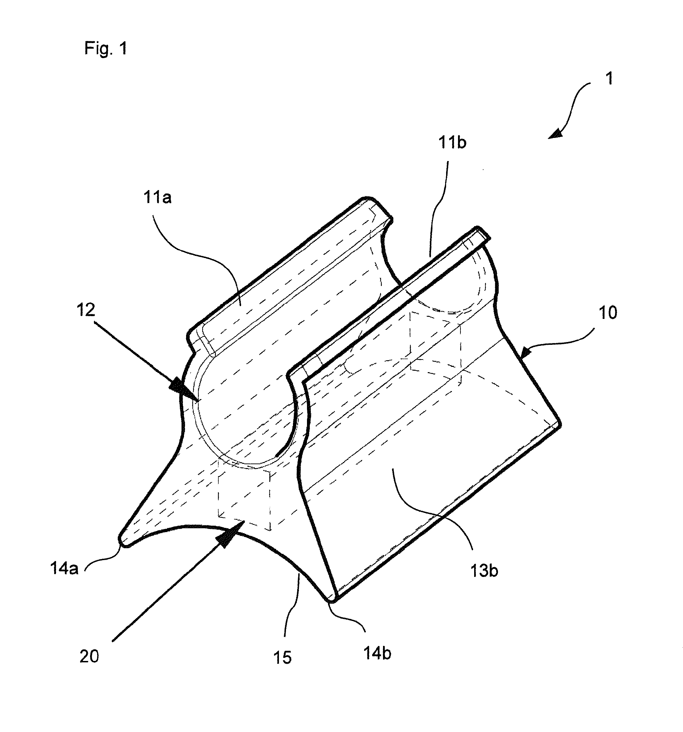

In Fig. 1 ist eine perspektivische Ansicht einer Haltevorrichtung 1 gemäß der bevorzugten Ausführungsform dargestellt. Die Haltevorrichtung (Kabelclip) 1 umfasst einen Haltekörper 10 sowie einen in diesem aufgenommenen Magneten 20.

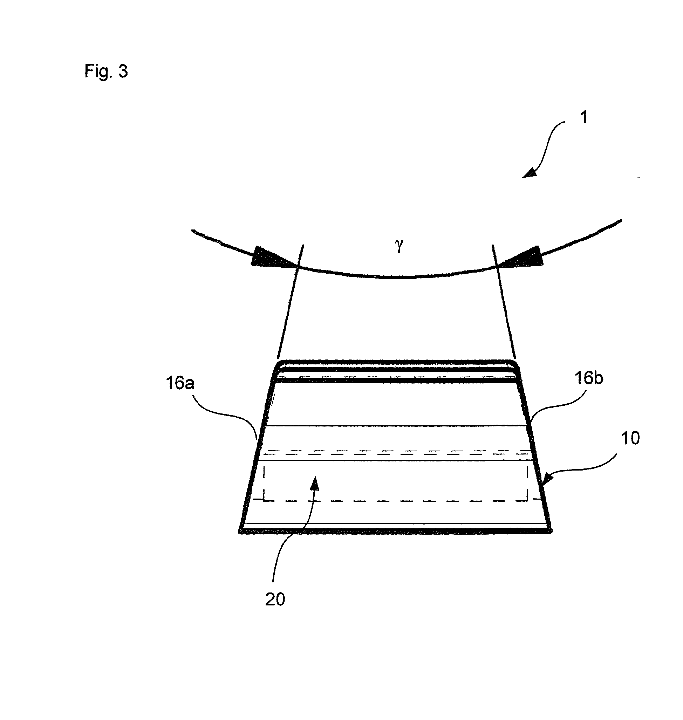

Der Haltekörper 10 umfasst Seitenflächen 13a, 13b sowie Endflächen 16a, 16b. Die Seitenflächen 13a, 13b erstrecken sich in Längsrichtung der Haltekörpers 10. Die Endflächen 16a, 16b schließen den Haltekörper 10 in Längsrichtung ab, und sind in der bevorzugten Ausführungsform geneigt ausgebildet (siehe hierzu die Seitenansicht von Figur 3). Der zwischen den Endflächen 16a, 16b ausgebildete Winkel γ beträgt in etwa 24°.

Der Haltekörper 10 weist ferner einen Aufnahmekanal 12 auf, der sich entlang der Längsrichtung des Haltekörpers 10 von einer Endfläche 16a zur anderen Endfläche 16b des Haltekörpers 10 erstreckt. In diesen Aufnahmekanal 12 kann ein kabelförmiger Gegenstand, wie ein Elektrokabel, aufgenommen werden.

Der Aufnahmekanal 12 ist im Querschnitt (senkrecht zur Längsrichtung des Haltekörpers 10) abschnittsweise kreisförmig ausgebildet, und weist an einer Seite des Haltekörpers 10 eine Öffnung auf. Die Öffnung erstreckt sich in Längsrichtung des Haltekörpers 10 von einer Endfläche 16a zur anderen Endfläche 16b.

Im Bereich dieser Öffnung des Aufnahmekanals 12 sind beidseitig zu dieser geneigte Vorsprünge 11a, 11b am Haltekörper 10 vorgesehen, die sich im Wesentlichen senkrecht zur Wölbung des Aufnahmekanals 12 erstrecken und in der vorliegenden Ausführungsform einen Öffnungswinkel α für den Aufnahmekanal 12 von 90° definieren.

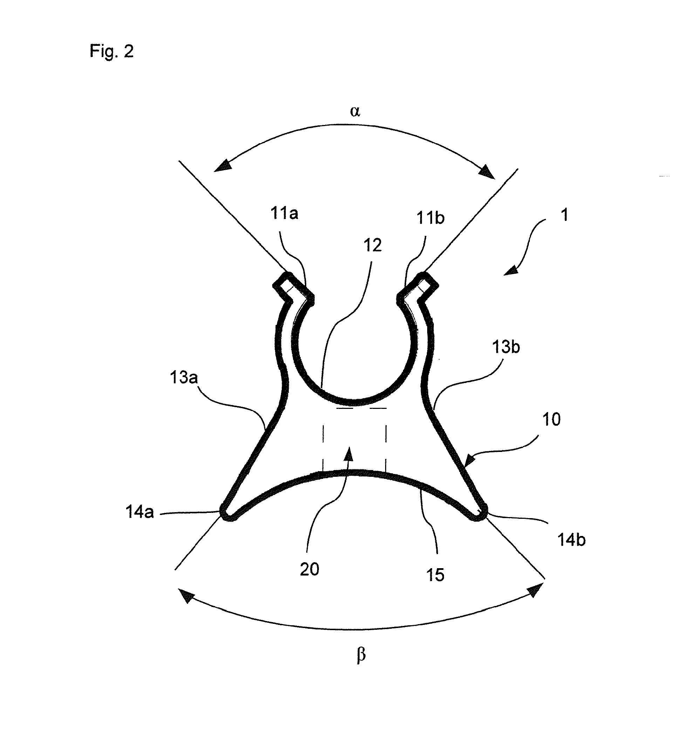

Die Kontur der Seitenflächen 13a, 13b richtet sich in dem Bereich des Haltekörpers 10, in dem der Aufnahmekanal 12 angeordnet ist, ausgehend von den Vorsprüngen 11a und 11b an der Kontur des Aufnahmekanals 12, sodass in der Draufsicht auf den Haltekörper 10 (siehe insbesondere Fig. 2) ein abschnittsweise rohrförmiger Haltekörperabschnitt ausgebildet wird.

Im Bereich des rohrförmigen Haltekörperabschnitts hat der Aufnahmekanal 12 einen Innenradius R4, und der Haltekörper 10 abschnittsweise einen Außenradius von R5.2. Durch die vergleichsweise dünne Wandung in diesem Bereich des Haltekörpers 10 sowie durch geeignete Auswahl des zur Ausbildung des Haltekörpers 10 verwendeten Kunststoffmaterials wird eine gewisse Flexibilität gewährleistet, so dass ein Kabel in den Aufnahmekanal 12 eingeklipst werden kann. Mit anderen Worten wird der Haltekörper 10 beim Einführen eines Kabels in den Aufnahmekanal 12 reversibel verformt, und federt zurück in seine Ausgangsposition, sobald das Kabel in den Aufnahmekanal aufgenommen ist. Dadurch, dass der Haltekörper 10 nach Einführen eines Kabels in diesem Bereich anschließend wieder in den Ausgangszustand zurückstrebt, wird auch eine Haltekraft am Kabel aufgebracht.

Ausgehend vom rohrförmigen Haltekörperabschnitt des Haltekörpers erstrecken sich die Seitenflächen 13a, 13b in der Draufsicht auf den Haltekörper 10 (siehe insbesondere Fig. 2) geradlinig, bilden zueinander einen Winkel β von etwa 60° aus, und gehen über jeweilige abgerundete Kantenbereich 14a, 14b in eine Anlagefläche 15 über, welche eine weitere Seite des Haltekörpers 10 ausbildet. Durch die Neigung der Seitenflächen 13a, 13b kann die Haltevorrichtung 1 auf den Kantenbereichen 14a, 14b stehend abgelegt werden, wenn die Haltevorrichtung 1 nicht verwendet wird.

Die Anlagefläche 15 ist nach innen gewölbt ausgebildet, sodass ein gerundeter Bereich des Haltekörpers 10 ausgebildet wird. Folglich kann die Anlagefläche 15 an einer Außenfläche eines zylindrischen Gegenstandes, wie einem Rohr, insbesondere einem zylindrisch ausgebildeten Tischbein, oder ähnlichem, angelegt werden.

Der Magnet 20 ist zumindest abstandsweise innerhalb des Haltekörpers 10 aufgenommen. In der bevorzugten Ausführungsform ist eine Seite des Magneten 20 im Bereich der Anlagefläche 15 freigelegt, sodass der Magnet 20 nach Ausbilden des Haltekörpers in eine entsprechende Aussparung eingeschoben werden kann und bei Verwendung der Haltevorrichtung 1 eine starke magnetische Wirkung gegenüber einem metallischen Gegenstand ausgebildet.

In einer Modifikation ist die freigelegte Fläche des Magneten 20 gegenüber der Anlagefläche 15 etwas zurückgesetzt, sodass der Magnet 20 beim Anbringen der Haltevorrichtung 1 an z.B. einem Tischbein nicht mit diesem in Kontakt kommt, und somit ein Verkratzen des Tischbeins vermieden wird.

In einer weiteren Modifikation ist die zur Anlagefläche 15 weisende Fläche des Magneten 20 vom Haltekörper 10 umschlossen, oder durch eine Beschichtung überzogen.

Die Haltevorrichtung 1 umfasst im vorliegenden Ausführungsbeispiel einen aus einem ABS-Kunststoff hergestellten Haltekörper 10. Dieser kann sowohl mit einem 3D-Drucker hergestellt werden, als auch mittels eines Spritzgussverfahrens. Somit ist es möglich, den Magneten 20 nach Ausbilden des Haltekörpers 10 in diesen einzulegen bzw. einzudrücken, oder alternativ den Magneten 20 bereits beim Ausbilden des Haltekörpers 10 mit dem ABS-Kunststoff zu Umformen.

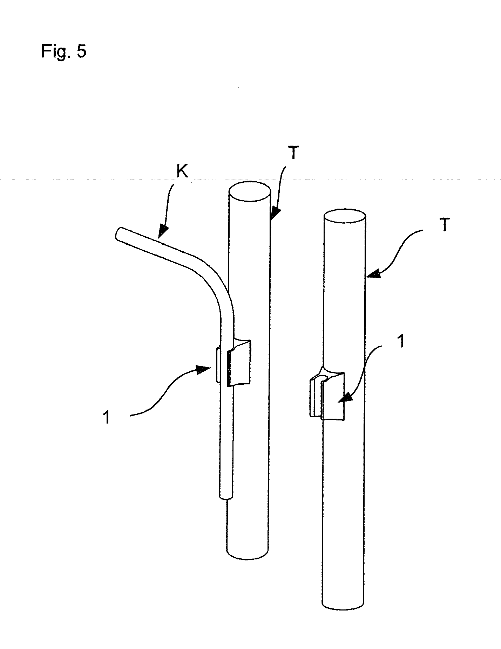

Der Magnet 20 ist gemäß der vorliegenden Ausführungsform bevorzugt ein Neodymmagnet, der eine starke Magnetkraft entwickeln kann. Auf diese Weise kann die Haltevorrichtung 1 sicher an vertikal ausgerichteten Gegenständen, wie dem in Fig. 5 gezeigten Tischbein, befestigt werden, ohne dass die Haltevorrichtung 1 beim Aufnehmen des Kabels verrutscht.

In der vorliegenden Ausführungsform ist die Haltevorrichtung 1 kompakt dimensioniert. Vorliegend weist die Haltevorrichtung 1 eine Länge von etwa 30 mm, eine Breite von etwa 18 mm und eine Höhe von etwa 15 mm auf.

Der Magnet 20 ist quaderförmig ausgebildet, und weist eine Länge von etwa 25mm, sowie eine Breite sowie Höhe von etwa 4mm auf.

Der Einsatz der Haltevorrichtung 10 zum Halten eines Kabels K an einem Möbelstück wird in der Fig. 3 illustriert.

Dabei wird die gewölbte Anlagefläche 15 der Haltevorrichtung 1 an die zylindrische Außenfläche des vertikal ausgerichteten Tischbeins T angelegt, und haftet aufgrund der vom Magneten 20 ausgeübten Magnetkraft. Anschließend (oder vor Anbringen der Haltevorrichtung 1 am Tischbein T) wird ein Kabel K in den Aufnahmekanal 12 des Haltekörper 10 eingedrückt, wobei Abschnitte des Haltekörpers 10 beim Eindrücken des Kabels K elastisch verformt werden und sich anschließend zumindest teilweise an die Außenkontur des Kabels K anpassen.

Gegebenenfalls kann die Haltevorrichtung 1 auch zusammen mit dem Kabel vom Tischbein T abgenommen werden, und am Tischbein T neu positioniert werden. Auf diese Weise ist es möglich, ein Kabel optimal an dem Verlauf des Tischbeins anzupassen bzw. nahe diesem zu führen. Falls erforderlich können auch weitere Haltevorrichtungen 1 zum Führen des Kabels K an diesem Tischbein T oder an einem anderen Abschnitt des Möbelstücks vorgesehen sein.

Nachfolgend werden einige weitere Ausführungsformen dargestellt.
1. Haltevorrichtung (1) zum Halten eines kabelförmigen Gegenstandes (K), insbesondere eines Kabels, an einem Gegenstand (T), wie einem Möbelstück, bevorzugt einem Tischbein, mit: einem Haltekörper (10) aus einem Kunststoffmaterial mit einem zur Aufnahme eines kabelartigen Gegenstandes zumindest abschnittsweise geöffneten Aufnahmekanal (12) sowie mit einer Anlagefläche (15), und einem Magneten (20), der im Bereich der Anlagefläche (15) im Haltekörper (10) aufgenommen ist.
2. Haltevorrichtung (1) gemäß Punkt 1, dadurch gekennzeichnet, dass der Haltekörper (10) mit einem geneigten Vorsprung (11a, 11b) versehen ist, der im Bereich der Öffnung des Aufnahmekanals (12) angeordnet ist.
3. Haltevorrichtung (1) gemäß Punkt 1 oder 2, dadurch gekennzeichnet, dass der Haltekörper (10) im Bereich der Öffnung des Aufnahmekanals (12) mit zwei geneigten Vorsprüngen (11a, 11b) versehen ist, die zueinander einen Winkel (α) von bevorzugt 90° ausbilden.
4. Haltevorrichtung (1) gemäß einem der vorangegangenen Punkte, dadurch gekennzeichnet, dass die Anlagefläche (15) konkav gewölbt ist/ nach innen gewölbt ausgebildet ist.
5. Haltevorrichtung (1) gemäß einem der vorangegangenen Punkte, dadurch gekennzeichnet, dass sich der Aufnahmekanal (12) von einer Endfläche (16a) des Haltekörpers (10) zu einer anderen Endfläche (16b) des Haltekörpers (10) erstreckt.
6. Haltevorrichtung (1) gemäß einem der vorangegangenen Punkte, dadurch gekennzeichnet, dass der Magnet (20) ein Neodymmagnet ist.
7. Haltevorrichtung (1) gemäß einem der vorangegangenen Punkte, dadurch gekennzeichnet, dass das Kunststoffmaterial des Haltekörpers (10) reversibel verformbar ist.
8. Haltevorrichtung (1) gemäß einem der vorangegangenen Punkte, dadurch gekennzeichnet, dass der Haltekörper (10) aus ABS-Kunststoff ausgebildet ist.
9. Haltevorrichtung (1) gemäß einem der vorangegangenen Punkte, dadurch gekennzeichnet, dass der Haltekörper eine Länge von etwa 30 mm, eine Breite von etwa 18 mm, und eine Höhe von etwa 15 mm aufweist.
10. Haltevorrichtung (1) gemäß einem der vorangegangenen Punkte, dadurch gekennzeichnet, dass die Anlagefläche (15) an einer zur Öffnung des Aufnahmekanals (12) gegenüberliegenden Seite des Haltekörpers (10) vorgesehen ist.
11. Haltevorrichtung (1) gemäß einem der vorangegangenen Punkte, dadurch gekennzeichnet, dass im Bereich des Aufnahmekanals (12) ein im Querschnitt zur Längsrichtung der Haltevorrichtung (12) abschnittsweise rohrförmiger Haltekörperabschnitt ausgebildet ist.
12. Verwendung einer Haltevorrichtung (1) gemäß einem der Punkte zum Anbringen eines kabelförmigen Gegenstandes, insbesondere eines Kabels, an einem bevorzugt zylinderförmigen Gegenstand wie einem Möbelstück, bevorzugt einem Tischbein.
13. Verwendung gemäß Punkt 12, bei der beim Einbringen eines kabelförmigen Gegenstandes in den Aufnahmekanal (12) ein Abschnitt des Haltekörpers (10) elastisch verformt wird.

## Patentansprüche

1. Haltevorrichtung (1) zum Halten eines kabelförmigen Gegenstandes (K), insbesondere eines Kabels, an einem Gegenstand (T), wie einem Möbelstück, bevorzugt einem Tischbein, mit:
einem Haltekörper (10) aus einem Kunststoffmaterial mit einem zur Aufnahme eines kabelartigen Gegenstandes zumindest abschnittsweise geöffneten Aufnahmekanal (12) sowie mit einer Anlagefläche (15),
einem Magneten (20), der im Bereich der Anlagefläche (15) im Haltekörper (10) aufgenommen ist,
**dadurch gekennzeichnet, dass** die Anlagefläche (15) konkav gewölbt ist.

2. Haltevorrichtung (1) gemäß Anspruch 1, **dadurch gekennzeichnet, dass** der Haltekörper (10) mit einem geneigten Vorsprung (11a, 11b) versehen ist, der im Bereich der Öffnung des Aufnahmekanals (12) angeordnet ist.

3. Haltevorrichtung (1) gemäß Anspruch 1 oder 2, **dadurch gekennzeichnet, dass** der Haltekörper (10) im Bereich der Öffnung des Aufnahmekanals (12) mit zwei geneigten Vorsprüngen (11a, 11b) versehen ist, die zueinander einen Winkel (α) von bevorzugt 90° ausbilden.

4. Haltevorrichtung (1) gemäß einem der vorangegangenen Ansprüche, **dadurch gekennzeichnet, dass** sich der Aufnahmekanal (12) von einer Endfläche (16a) des Haltekörpers (10) zu einer anderen Endfläche (16b) des Haltekörpers (10) erstreckt.

5. Haltevorrichtung (1) gemäß einem der vorangegangenen Ansprüche, **dadurch gekennzeichnet, dass** der Magnet (20) ein Neodymmagnet ist.

6. Haltevorrichtung (1) gemäß einem der vorangegangenen Ansprüche, **dadurch gekennzeichnet, dass** das Kunststoffmaterial des Haltekörpers (10) reversibel verformbar ist.

7. Haltevorrichtung (1) gemäß einem der vorangegangenen Ansprüche, **dadurch gekennzeichnet, dass** der Haltekörper (10) aus ABS-Kunststoff ausgebildet ist.

8. Haltevorrichtung (1) gemäß einem der vorangegangenen Ansprüche, **dadurch gekennzeichnet, dass** der Haltekörper eine Länge von etwa 30 mm, eine Breite von etwa 18 mm, und eine Höhe von etwa 15 mm aufweist.

9. Haltevorrichtung (1) gemäß einem der vorangegangenen Ansprüche, **dadurch gekennzeichnet, dass** die Anlagefläche (15) an einer zur Öffnung des Aufnahmekanals (12) gegenüberliegenden Seite des Haltekörpers (10) vorgesehen ist.

10. Haltevorrichtung (1) gemäß einem der vorangegangenen Ansprüche, **dadurch gekennzeichnet, dass** im Bereich des Aufnahmekanals (12) ein im Querschnitt zur Längsrichtung der Haltevorrichtung (12) abschnittsweise rohrförmiger Haltekörperabschnitt ausgebildet ist.

11. Verwendung einer Haltevorrichtung (1) gemäß einem der vorangegangenen Ansprüche zum Anbringen eines kabelförmigen Gegenstandes, insbesondere eines Kabels, an einem bevorzugt zylinderförmigen Gegenstand wie einem Möbelstück, bevorzugt einem Tischbein.

12. Verwendung gemäß Anspruch 11, bei der beim Einbringen eines kabelförmigen Gegenstandes in den Aufnahmekanal (12) ein Abschnitt des Haltekörpers (10) elastisch verformt wird.
